# EUROPÄISCHE PATENTSCHRIFT

(11) **EP 4 584 512 B1**
(45) Veröffentlichungstag und Bekanntmachung des Hinweises auf die Patenterteilung: **24.12.2025**
(21) Anmeldenummer: 23769156.3
(22) Anmeldetag: 11.09.2023
(51) Int. Cl.: F16D 11/14

(54) **KUPPLUNGSANORDNUNG**
CLUTCH ASSEMBLY
BLOC D'EMBRAYAGE

(30) Priorität: 15.09.2022 DE 102022123602
(43) Veröffentlichungstag der Anmeldung: 16.07.2025
(73) Patentinhaber: AUDI AG, 85057 Ingolstadt (DE)
(72) Erfinder: GEBHARD, Bastian, 92339 Beilngries (DE)
(74) Vertreter: Bierschneider, Walter
(86) Internationale Anmeldenummer: PCT/EP2023/074832
(87) Internationale Veröffentlichungsnummer: WO 2024/056567

(56) Entgegenhaltungen:
- DE-A1- 10 062 355
- DE-A1- 10 062 355
- DE-A1- 102013 205 174
- DE-A1- 102013 218 779
- DE-A1- 102013 218 779
- DE-A1- 102020 203 132
- JP-B2- 6 948 473
- US-A1- 2013 334 001
- US-A1- 2015 080 167

## Beschreibung

Die Erfindung betrifft eine Kupplungsanordnung gemäß dem Oberbegriff des Anspruches 1.

Eine gattungsgemäße Kupplungsanordnung weist einen ersten Wellenabschnitt und einen zweiten Wellenabschnitt auf, die mittels einer Klauenkupplung koppelbar sind. Die Klauenkupplung weist eine Verschiebeklaue auf, die auf den ersten Wellenabschnitt drehfest, jedoch axial verschiebbar angeordnet ist. Zudem weist die Klauenkupplung eine damit zusammenwirkende Festklaue auf, die auf dem zweiten Wellenabschnitt drehfest und axial ortsfest angeordnet ist.

Ein regulärer Schließvorgang wird mit einem geringen Drehzahlunterschied zwischen den beiden Wellenabschnitten durchgeführt, das heißt bei nahezu Gleichlauf der beiden Wellenabschnitte, zum Beispiel bei 10 Upm. In einem solchen regulären Schließvorgang bringt eine aktorbetätigte Schiebemuffe in Axialrichtung unter Zwischenschaltung einer Überlastfeder die Verschiebeklaue zunächst bis in Anlage Zahn auf Zahn mit der Festklaue. Ab Erreichen der Anlage Zahn auf Zahn wird die Schiebemuffe weiter bis in ihre Schließposition verstellt, und zwar unter Aufbau einer axial auf die Klauen wirkenden Überlastfederkraft. Sobald bei geringem Drehwinkelversatz eine Anlage Zahn auf Lücke hergestellt ist, gelangen die beiden Klauen unter Abbau der Überlastfederkraft in Formschlußverbindung.

In einem Fehlerfall kann bei übermäßig großem Drehzahlunterschied die Schiebemuffe vom Aktor fehlerhaft in ihre Schließposition verstellt werden, während die Verschiebeklaue gegen Abweiskonturen der Festklaue abprallt.

Dadurch baut sich eine axiale Dynamik auf, bei der die Verschiebeklaue in einer Rückfederbewegung axial entgegen der Schließrichtung von den Abweiskonturen der Festklaue abprallt und anschließend wieder in Schließrichtung in die Anlage Zahn auf Zahn zurückfedert, und zwar unter Ausübung eines Stoßes auf die Festklaue (das heißt auf deren Abweiskonturen). Bei ausreichend großer Stoßenergie kann Verschiebklaue unbeabsichtigt (sowie trotz der Abweiskonturen) in Formschlußverbindung mit der Festklaue gelangen, wodurch die Betriebssicherheit der Klauenkupplung beeinträchtigt sein kann.

Aus der DE 103 39 125 A1 ist eine flächenförmige Anordnung zur elastischen Aufnahme von Stößen in einem Fahrzeug bekannt. Aus der DE 201 06 540 U1 ist ein Feder- und Dämpfungselement mit Füllung aus Gummigranulat bekannt. Aus der DE 10 2008 040 508 A1 ist eine Vorrichtung zum Andrücken einer Zahnstange bekannt. Aus der EP 3 608 517 A1 ist eine Dämpfungsvorrichtung für einen Gasturbinenmotor bekannt. Aus der EP 3 708 491 A1 ist eine mit Hilfe von Partikeln gedämpfte Torsionsstange bekannt.

Aus dem Stand der Technik nach DE 10 2013 218779 A1, DE 10 2013 205174 A1 und DE 100 62 355 C2 sind weitere Klauenkupplungen mit Dämpfungselementen bekannt.

Die Aufgabe der Erfindung besteht darin, eine Kupplungsanordnung bereitzustellen, deren Betriebssicherheit im Vergleich zum Stand der Technik in einfacherweise erhöht ist.

Die Aufgabe ist durch die Merkmale des Anspruches 1 gelöst. Bevorzugte Ausführungsbeispiele der Erfindung sind in den Unteransprüchen offenbart. Die Erfindung geht von einer Kupplungsanordnung mit einem ersten Wellenabschnitt und einem zweiten Wellenabschnitt auf, die mittels einer Klauenkupplung koppelbar sind. Die Klauenkupplung weist eine Verschiebeklaue auf, die auf einem der Wellenabschnitte drehfest, jedoch axial verschiebbar angeordnet ist. Die Verschiebeklaue kann in einem bestimmten Betriebszustand, insbesondere in einem Fehlerfall, in einer Rückfederbewegung schlagartig entgegen der Schließrichtung verstellt werden. Gemäß dem kennzeichnenden Teil des Anspruches 1 kann zum Abbau von Bewegungsenergie, insbesondere Stoßenergie, der Verschiebeklaue ein Verdämpfungselement bereitgestellt werden. Bei der Rückfederbewegung kann die Verschiebeklaue unter Abbau der Bewegungsenergie gegen das Dämpfungselement anschlagen.

In einer technischen Umsetzung kann die Klauenkupplung eine Festklaue aufweisen. Diese ist auf dem anderen Wellenabschnitt drehfest und bevorzugt axial ortsfest angeordnet. Die Verschiebeklaue kann mit Hilfe einer aktorbetätigten Stelleinheit, insbesondere einer Schiebemuffe, in eine Schließposition oder in eine Offenposition verstellt werden. Zwischen der Stelleinheit (das heißt der aktorbetätigten Schiebemuffe) und der Verschiebeklaue kann eine Überlastfeder abgestützt sein.

Bei einer solchen Anordnung ergibt sich folgender regulärer Schließvorgang: Die aktorbetätigte Schiebemuffe drückt in Axialrichtung unter Zwischenschaltung der Überlastfeder die Verschiebklaue zunächst in Schließrichtung. Sofern sich die Schaltklauen der Verschiebeklaue und der Festklaue einander in Axialrichtung Zahn auf Lücke gegenüberliegen, erfolgt eine leichtgängige Formschlußkupplung. Im wahrscheinlicheren Fall kommen beim Schließvorgang jedoch zunächst die Schaltklauen der Verschiebeklaue und der Festklaue Zahn auf Zahn in Anlage. Ab Erreichen der Anlage Zahn auf Zahn wird die Schiebemuffe bis in ihre Schließposition verstellt, wodurch sich in der Überlastfeder eine axial auf die Klauen wirkende Überlastfederkraft aufbaut. Sobald durch eine geringe relative Winkelverdrehung bei geringem Drehzahlunterschied zwischen den beiden Wellenabschnitten eine Anlage Zahn auf Lücke hergestellt ist, gelangen die beiden Klauen unter Abbau der Überlastfederkraft in Formschlußverbindung.

Im Unterschied zum obigen regulären Schließvorgang wird nachfolgend ein Fehlerfall beschrieben, bei dem das erfindungsgemäße Dämpfungselement zum Einsatz kommen kann. Im Fehlerfall wird bei übermäßig großem Drehzahlunterschied zwischen den Wellenabschnitten die Schiebemuffe fehlerhaft vom Aktor bis in ihre Schließposition verstellt. Aufgrund des übermäßig großen Drehzahlunterschieds kommt es nicht zu einer leichtgängigen Formschlußkupplung der Klauen. Vielmehr ist die Verschiebeklaue nur bis in Anlage Zahn auf Zahn mit der Festklaue bringbar. Die federvorgespannte Verschiebeklaue prallt dabei an Abweiskonturen der Festklaue entgegen der Schließrichtung ab. Auf diese Weise baut sich eine axiale Dynamik auf, in der die Verschiebeklaue von den Festklauen-Abweiskonturen axial in Gegen-Schließrichtung in einer Rückfederbewegung verstellt wird und anschließend wieder in Schließrichtung bis in Anlage Zahn auf Zahn zurückfedert, und zwar unter Ausübung eines Stoßes auf die Festklaue. Zum Abbau von Stoßenergie schlägt die Verschiebeklaue in ihrer Rückfederbewegung gegen das Dämpfungselement an. Auf diese Weise wird unter Verformung des Dämpfungselements Bewegungsenergie (das heißt Stoßenergie) der Verschiebeklaue abgebaut. Dadurch kann ein unbeabsichtigtes Schließen der Formschlußkupplung aufgrund zu großer Stoßenergie der Verschiebeklaue verhindert werden. Im Gegensatz dazu würde ohne Bereitstellung des Dämpfungselementes die Verschiebeklaue mit übermäßig großer Stoßenergie zurück in Anlage Zahn auf Zahn federn und ungewollt in Formschlußkupplung mit der Festklaue gelangen können.

In einer konkreten Ausführungsform kann sich die Verschiebeklaue ringförmig um den Außenumfang des ersten Wellenabschnittes erstrecken. Die Verschiebeklaue kann in diesem Fall mit ihrer, von den Klauen abgewandten Stirnseite in Anschlag mit dem Dämpfungselement gebracht werden. Für eine einwandfreie Funktionsfähigkeit ist es von Vorteil, wenn sich das Dämpfungselement ringförmig um den Außenumfang des ersten Wellenabschnittes erstreckt und in Umfangsrichtung betrachtet durchgängig in Anschlag mit der Verschiebeklaue bringbar ist.

Erfindungsgemäß besteht das Dämpfungselement aus einem plastisch verformbaren Dämpfungskörper. Dieser ist an einem Trägerelement angebunden sein, dass am ersten Wellenabschnitt befestigbar ist. In einem nicht erfindungsgemäßen Ausführungsbeispiel kann das Dämpfungselement aus einem Gummi- beziehungsweise Elastomermaterial ausgebildet sein. Besonders bevorzugt kann das Dämpfungselement ein Hohlprofilelement sein, dessen Hohlkammer mit Dämpfungsmaterial, etwa Dämpfungsgel oder Dämpfungspartikel gefüllt ist. Nachfolgend ist ein Ausführungsbeispiel der Erfindung anhand der beigefügten Figuren beschrieben.

Es zeigen:

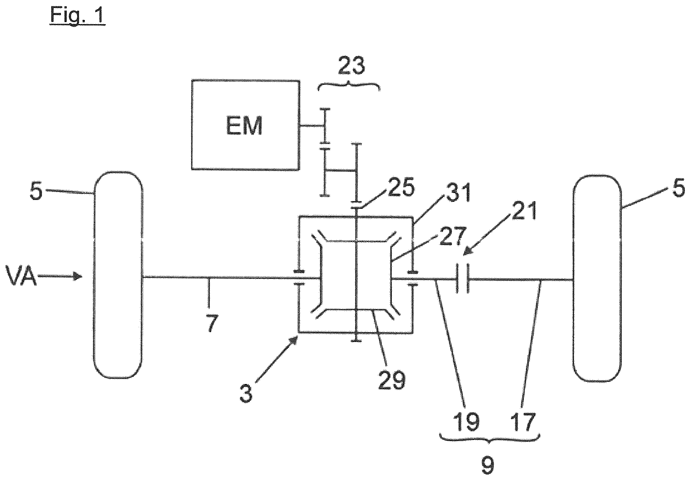

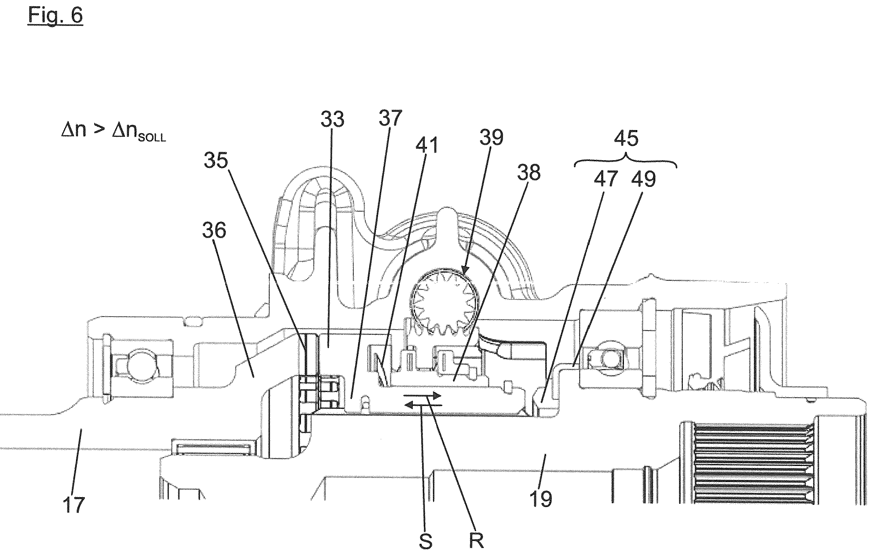

- Fig. 1 bis 11: jeweils Ansichten, anhand derer eine Kupplungsanordnung veranschaulicht sind.

In der Figur 1 ist beispielhaft ein Klauenkupplung 21 in einer elektrisch antreibbaren Vorderachse VA eines elektrisch betriebenen Fahrzeugs eingebaut. Die Vorderachse VA ist mit einer Elektromaschine EM ausgestattet, die über ein Vorderachsdifferenzial 3 auf die zum rechten und linken Vorderrad 5 führenden linken und rechten Antriebswellen 7, 9 abtreibt. Wie aus der Figur 1 weiter hervorgeht, ist die vordere rechte Antriebswelle 9 aufgeteilt in einen radseitigen Wellenabschnitt 17 und in einen achsseitigen Wellenabschnitt 19. Diese sind mittels der Klauenkupplung 21 koppelbar, um im Fahrbetrieb die Elektromaschine EM in Antriebsverbindung mit den Fahrzeugrädern 5 zu bringen. Alternativ sind die Wellenabschnitte 17, 19 voneinander abkoppelbar, um im Fahrbetrieb sowie bei deaktivierter Elektromaschine EM Schleppverluste zu vermeiden.

Bei geöffneter Klauenkupplung 21 bleibt daher im Fahrbetrieb lediglich eine lastlose Ausgleichsbewegung der Ausgleichskegelräder 29 im Vorderachsdifferenzial 3. Der Rest der Antriebseinheit (das heißt Getriebe und Elektromaschine) kommt dagegen zum Stillstand, so dass Schleppverluste stark reduziert sind.

In der Figur 1 ist die Elektromaschine EM der Vorderachse VA über ein Vorgelege 23 mit einem eingangsseitigen Außenzahnrad 25 des Vorderachsdifferenzials 3 trieblich verbunden. An der Ausgangsseite des Vorderachsdifferenzials 3 sind Achskegelräder 27 an den beiden Antriebswellen 7, 9 angebunden. Die Achskegelräder 27 und damit verzahnte Ausgleichskegelräder 29 sind innerhalb eines Ausgleichsgehäuses 31 des Achsdifferenzials 3 positioniert.

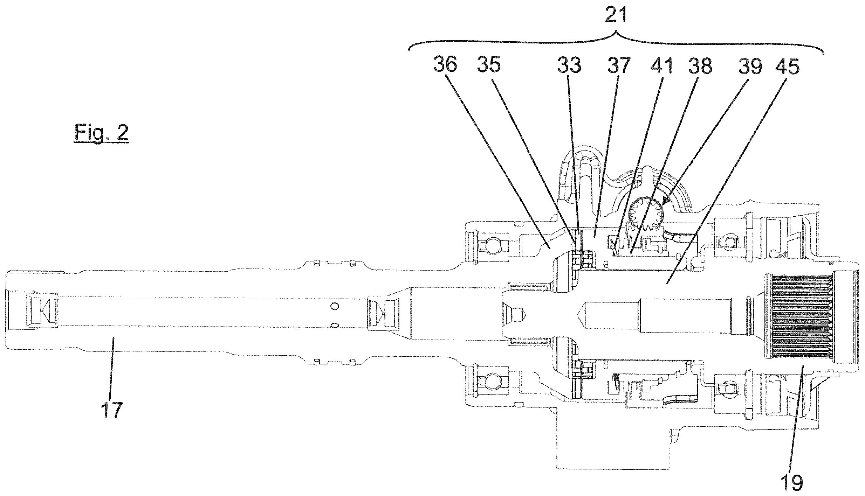

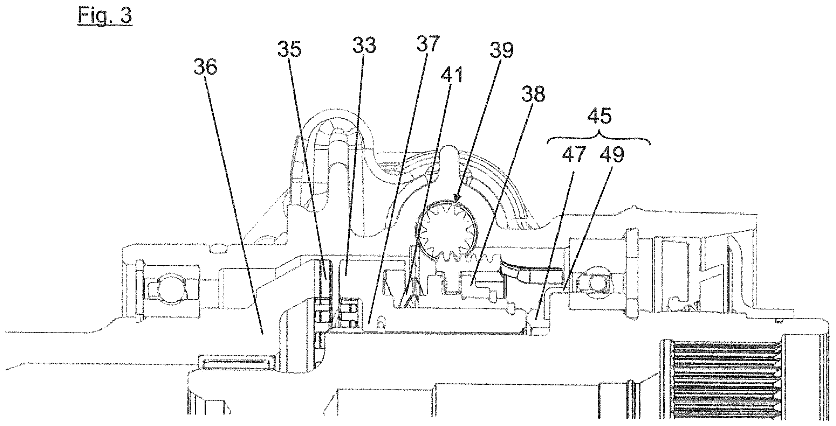

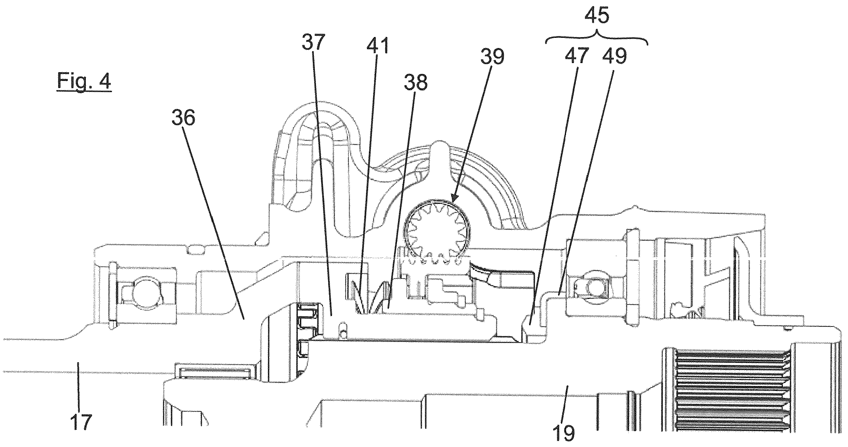

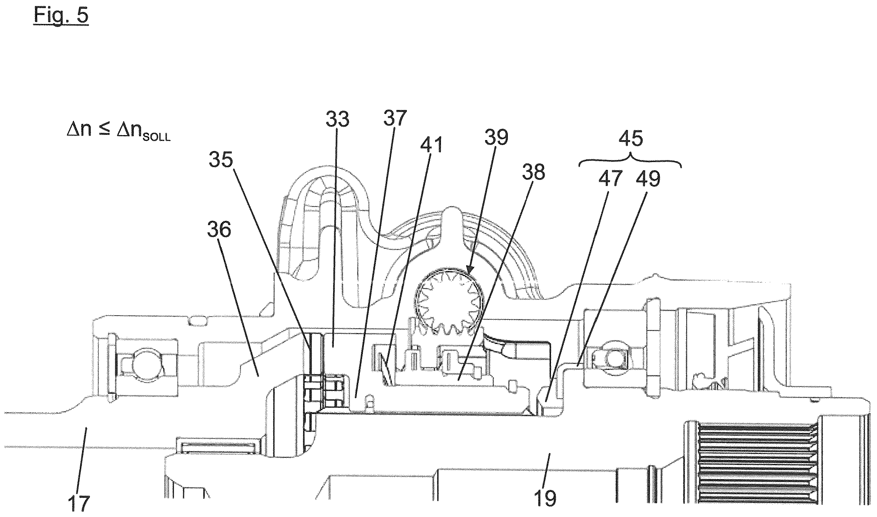

Nachfolgend werden anhand der Figur 2 der Aufbau und die Funktionsweise der Klauenkupplung 21 beschrieben. So schließt sich an das (in der Figur 2 nicht gezeigte) Achskegelrad 27 der achsseitige Wellenabschnitt 19 an. Der achsseitige Wellenabschnitt 19 ist mit seinem äußeren Wellenende radial innerhalb einer zum Vorderrad 5 geführten Steckwelle drehgelagert, die den radseitigen Wellenabschnitt 17 bildet. Die Klauenkupplung 21 weist in der Figur 2 achsseitige Schaltklauen 33 und radseitige Schaltklauen 35 auf, die bei geschlossener Klauenkupplung 21 miteinander in Formschlußverbindung sind. Die radseitigen Schauklauen 35 sind in der Figur 2 Bestandteil einer Festklaue 36, die auf dem radseitigen Wellenabschnitt 17 drehfest sowie axial ortsfest angeordnet ist. Die achsseitigen Schaltklauen 33 sind Bestandteile einer Verschiebeklaue 37, die auf einer Steckverzahnung des achsseitigen Wellenabschnittes 19 drehfest, jedoch axial verschiebbar angeordnet ist. Auf dem Außenumfang der Verschiebeklaue 37 ist eine ringförmige Schiebemuffe 38 drehfest, jedoch axial verstellbar angeordnet. Die Schiebemuffe 38 ist mittels eines Aktors 39 zwischen einer Schließposition (Figuren 4 und 5) und einer Offenposition (Figur 3) axial verstellbar. Gemäß den Figuren ist zwischen der Schiebemuffe 38 und den achsseitigen Schaltklauen 33 der Verschiebeklauen 37 eine Überlastfeder 41 abgestützt.

Die Verschiebeklaue 37 ist in einem später beschriebenen Fehlerfall mit ihrer, von den achsseitigen Schaltklauen 33 abgewandten Stirnseite 43 (Figur 2) in Anschlag mit einem Dämpfungselement 45 bringbar. Das Dämpfungselement 45 erstreckt sich ringförmig um den Außenumfang des achsseitigen Wellenabschnittes 19. Zudem ist das Dämpfungselement 45 zweiteilig ausgeführt, und zwar aus einem, im Wesentlichen plastisch verformbaren Dämpfungskörper 47 und einem bauteilsteifen Trägerelement 49, an dem der Dämpfungskörper 47 angebunden ist. Das Trägerelement 49 ist am achsseitigen Wellenabschnitt 19 befestigt.

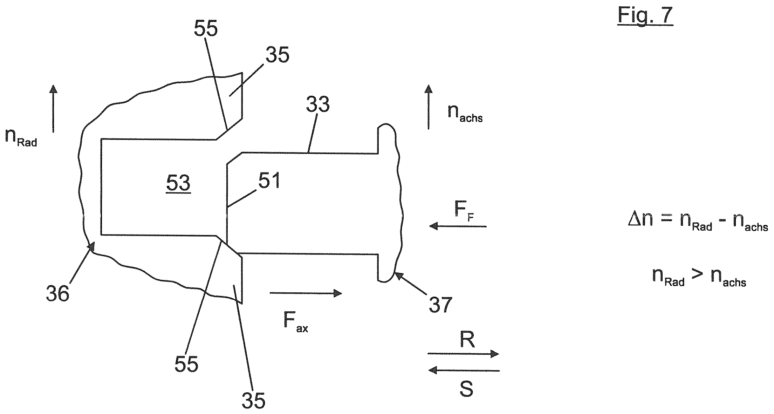

Nachfolgend werden anhand der Figuren 3 bis 5 verschiedene Betriebszustände der Klauenkupplung 21 beschrieben. In der Figur 3 befindet sich die aktorbetätigte Schiebemuffe 38 in ihrer Offenposition, in der die Schaltkauen 33, 35 außer Eingriff sind. In der Figur 4 ist ein Ankoppelvorgang (das heißt Schließvorgang) der Klauenkupplung 21 erfolgt, bei dem die radseitigen und achsseitigen Schaltklauen 33, 35 einander Zahn 51 auf Lücke 53 (nur in der Figur 7 gezeigt) axial gegenüberliegen. Bei aktiviertem Aktor 39 wird die Schiebemuffe 38 mitsamt damit bewegungsgekoppelter Verschiebeklaue 37 von der in der Figur 4 gezeigten Offenposition in die Schließposition verschoben, in der die rad- und achsseitigen Schaltklauen 33, 35 leichtgängig in Eingriff gebracht sind.

Im wahrscheinlicheren Fall können - in Abkehr von der Figur 4 - in einem regulären Schließvorgang die rad- und achsseitigen Schaltklauen 33, 35 beim Schließvorgang nicht Zahn 51 auf Lücke 53, sondern vielmehr Zahn 51 auf Zahn 51 einander axial gegenüberliegen, wie es in der Figur 5 gezeigt ist. In diesem Fall kommen beim Schließvorgang die rad- und achsseitigen Schaltklauen 33, 35 zunächst Zahn 51 auf Zahn 51 in Anlage. Ab Erreichen der Anlage Zahn 51 auf Zahn 51 verstellt der Aktor 39 die Schiebemuffe 38 um einen Überlasthub weiter bis in ihre Schließposition, und zwar unter Aufbau einer Federkraft F_{F} (Figur 7) der Überlastfeder 41, die auf die Verschiebeklaue 37 wirkt. Sobald durch eine geringe relative Winkelverdrehung sowie bei geringem Drehzahlunterschied Δn zwischen den beiden Wellenabschnitten 17, 19 Zahn 51 auf Lücke 53 gegenüberstehen, wird die Verschiebeklaue 37 unter Aufbrauch des Überlasthubes sowie unter Abbau der Federkraft F_{F} der Überlastfeder 41 schlagartig in Formschlußverbindung mit der Festklaue 36 gebracht.

Der oben anhand der Figur 5 beschriebene reguläre Schließvorgang wird unter der Bedingung durchgeführt, dass der Drehzahlunterschied Δn zwischen der Drehzahl n_{Rad} des radseitigen Wellenabschnitts 17 und der Drehzahl n_{achs} des achsseitigen Wellenabschnitts 19 kleiner oder gleich einem Sollwert Δnₛₒₗₗ ist. Dieser kann beispielhaft bei 10 Upm liegen.

Nachfolgend wird anhand der Figuren 5 und 6 ein Fehlerfall beschrieben, bei dem das erfindungsgemäße Dämpfungselement 45 zum Einsatz kommt. Im Fehlerfall betätigt der Aktor 39 bei unzulässig großem Drehzahlunterschied (das heißt Δn > Δnₛₒₗₗ) die Schiebemuffe 38 fehlerhafterweise in ihre Schließposition. Aufgrund des übermäßig großem Drehzahlunterschiedes Δn können die Schaltklauen 33, 35 nicht miteinander in Formschluß gelangen. Vielmehr prallt die Verschiebeklaue 37 gegen Abweiskonturen 55 (Figur 7) der Festklaue 36 ab.

Die Abweiskonturen 55 sind gemäß der Figur 7 schräggestellte Anlaufflanken an den axial äußeren Enden der Klauen-Lücken 53 der Festklaue 36. In der Figur 7 ist beispielhaft die Drehzahl n_{Rad} des radseitigen Wellenabschnittes 17 größer als die Drehzahl n_{achs} des achsseitigen Wellenabschnittes 19. Beim (eigentlich unzulässigen) Schließvorgang kommt die Schaltklaue 33 der Verschiebeklaue 37 in Gleitanlage mit der schräggestellten Anlaufflanke der Abweiskontur 55, wodurch eine auf die Verschiebeklaue 37 wirkende Axialkraftkomponente Fₐₓ (Figur 7) erzeugt wird. Auf diese Weise baut sich eine axiale Dynamik auf, in der die Verschiebeklaue 37 in einer Rückfederbewegung R entgegen der Schließrichtung sowie unter Aufbau der Federkraft F_{F} der Überlastfeder 41 verstellt wird sowie anschließend wieder in Schließrichtung in Anlage Zahn 51 auf Zahn 51 (das heißt auf Zahn-Abweiskontur 55) zurückfedert, und zwar unter Ausübung eines Stoßes S auf die Festklaue 36.

Die Verschiebeklaue 37 schlägt in ihrer Rückfederbewegung R gegen das Dämpfungselement 45, so dass unter plastischer Verformung des Dämpfungselements 45 Bewegungsenergie in der Verschiebeklaue 37 abgebaut wird. Entsprechend wird der in Schließrichtung erfolgende Verschiebeklauen-Stoß S auf die Festklaue 36 mit reduzierter Stoßenergie ausgeübt. Ein unbeabsichtigtes Schließen der Klauenkupplung 21 aufgrund zu großer Stoßenergie der Verschiebeklaue 36 ist daher verhindert ist.

Bei weggelassenem Dämpfungselement 36 würde dagegen die Verschiebeklaue 37 im obigen Fehlerfall ungedämpft gegen die Ringschulter 57 des achsseitigen Wellenabschnittes 19 prallen und von dort mit hoher Anfangsgeschwindigkeit sowie unter Abbau der in der Überlastfeder 41 gespeicherten Federkraft mit übermäßig großer Stoßenergie in Schließrichtung zurückfedern. Aufgrund der übermäßig großen Stoßenergie würde die Gefahr bestehen, dass die Verschließklaue 37 die Abweiskonturen 55 der Festklaue 36 überwindet und es zu einer unbeabsichtigten Formschlußkupplung zwischen der Verschiebeklaue 37 und der Festklaue 36 kommt.

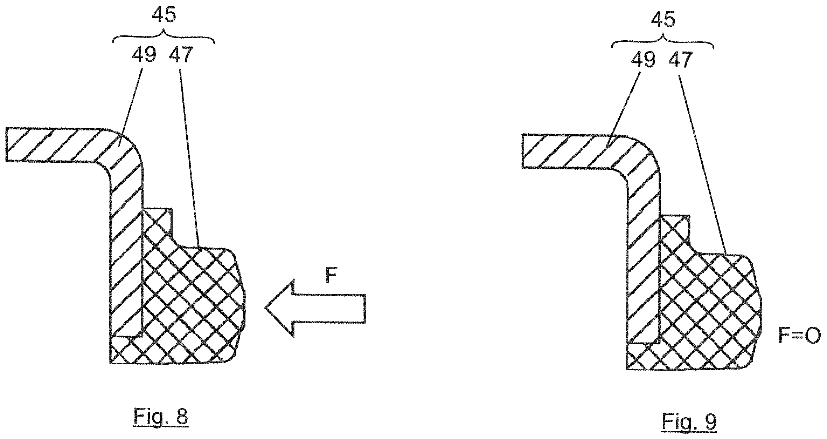

In den Figuren 8 und 9 ist das Dämpfungselement 45 gemäß einer ersten Ausführungsvariante aus einem ringförmigen Blechwinkelprofil als Tragelement 49 ausgebildet. An dem Blechwinkelprofil ist ein Elastomermaterial als Dämpfungskörper 47 anvulkanisiert, das nach erfolgter Kraftbeaufschlagung F (Figur 8) teilweise wieder in seine Ausgangsform elastisch nachgiebig zurückkehrt.

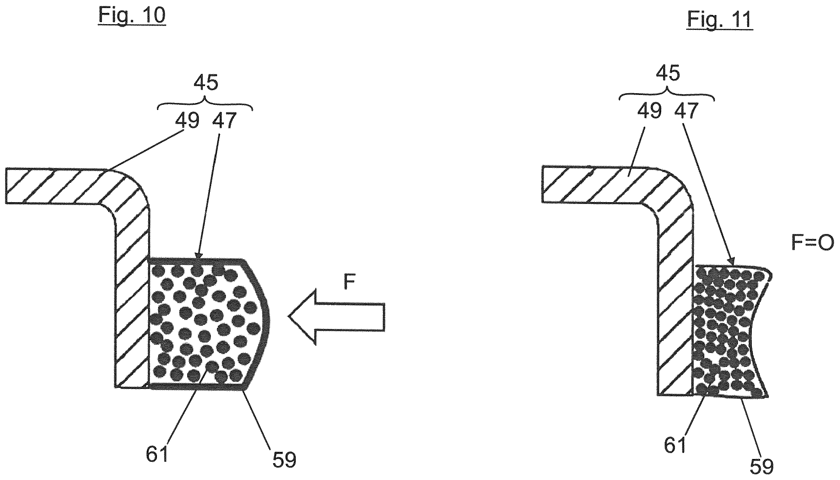

Alternativ dazu weist in den Figuren 10 und 11 der Dämpfungskörper 47 ein biegeschlaffes Hohlprofilelement 59 auf, dessen Hohlkammer mit Dämpfungsmaterial 61, etwa Dämpfungspartikel, gefüllt ist. Der so ausgebildete Dämpfungskörper 47 verformt sich weitgehend plastisch, so dass nach erfolgter Kraftbeaufschlagung F (Figur 10) der Dämpfungskörper 47 in seinem verformten Zustand (Figur 11) verbleibt.

### BEZUGSZEICHENLISTE:

- 3: Vorderachsdifferenzial
- 5: Vorderräder
- 7, 9: Antriebswellen der Vorderachse
- 17: radseitiger Wellenabschnitt
- 19: achsseitiger Wellenabschnitt
- 21: Klauenkupplung
- 23: Vorgelege
- 25: Außenzahnrad
- 27: Achskegelräder
- 29: Ausgleichskegelräder
- 31: Ausgleichsgehäuse
- 33: achsseitige Schaltklauen
- 35: radseitige Schaltklauen
- 36: Festklaue
- 37: Verschiebeklaue
- 38: Schiebemuffe
- 39: Aktor
- 41: Überlastfeder
- 43: Verschiebeklauen-Stirnseite
- 45: Dämpfungselement
- 47: Dämpfungskörper
- 49: Trägerelement
- 51: Zahn
- 53: Lücke
- 55: Abweiskonturen
- 57: Ringschulter
- 59: Hohlprofilelement
- 61: Dämpfungsmaterial
- Δn: Drehzahlunterschied
- Δnₛₒₗₗ: Sollwert
- n_{rad}: Drehzahl des radseitigen Wellenabschnitts 17
- n_{achs}: Drehzahl des achsseitigen Wellenabschnitts 19
- R: Rückfederbewegung
- S: Stoß
- Fₐₓ: Axialkraftkomponente
- F_{F}: Federkraft

## Patentansprüche

1. Kupplungsanordnung mit zwei Wellenabschnitten (17, 19), die mittels einer Klauenkupplung (21) koppelbar sind, die eine Verschiebeklaue (37) aufweist, die auf einem der Wellenabschnitte (19) drehfest, jedoch axial verschiebbar angeordnet ist, wobei die Verschiebeklaue (37) in einem bestimmten Betriebszustand, nämlich in einem Fehlerfall, entgegen der Schließrichtung in einer Rückfederbewegung (R) verstellbar ist,
wobei zum Abbau von Bewegungsenergie, nämlich Stoßenergie, ein Dämpfungselement (45) bereitgestellt ist, gegen das die Verschiebeklaue (37) in der Rückfederbewegung (R) anschlägt,
**dadurch gekennzeichnet,**
**dass** das Dämpfungselement (45) aus einem plastisch verformbaren Dämpfungskörper (47) besteht, der an einem Trägerelement (49) angebunden ist, das an dem ersten Wellenabschnitt (19) befestigt ist, und dass die Stoßenergie der Verschiebeklaue (37) unter plastischer Verformung des Dämpfungselements (45) abbaubar ist, so dass im Fehlerfall ein unbeabsichtigtes Schließen der Klauenkupplung (21) aufgrund zu großer Stoßenergie der Verschiebeklaue (37) verhindert ist.

2. Kupplungsanordnung nach Anspruch 1, **dadurch gekennzeichnet, dass** die Klauenkupplung (21) eine Festklaue (36) aufweist, die auf dem anderen Wellenabschnitt (17) drehfest und axial ortsfest angeordnet ist, und dass die Verschiebeklaue (37) mittels einer aktorbetätigten Schiebemuffe (38) in die Schließposition oder in eine Offenposition verstellbar ist, und dass zwischen der aktorbetätigten Schiebemuffe (38) und der Verschiebeklaue (37) eine Überlastfeder (41) abgestützt ist, so dass
in einem regulären Schließvorgang die aktorbetätigte Schiebemuffe (38) in Axialrichtung unter Zwischenschaltung der Überlastfeder (41) die Verschiebeklaue (37) zunächst bis in Anlage Zahn (51) auf Zahn (51) mit der Festklaue (36) bringbar ist, und dass ab Erreichen der
Anlage Zahn (51) auf Zahn (51) die Schiebemuffe (38) weiter bis in ihre Schließposition verstellbar ist, und zwar unter Aufbau einer axial auf die Klauen (36, 37) wirkenden Überlastfederkraft (F_{F}) der Überlastfeder (41), und dass, sobald bei geringem Drehzahlunterschied (Δn _{≤} Δnₛₒₗₗ) eine Anlage Zahn (51) auf Lücke (53) hergestellt ist, die beiden Klauen (36, 37) unter Abbau der Überlastfederkraft (F_{F}) der Überlastfeder (41) in Formschlußverbindung gelangen, und so dass
im Fehlerfall bei einem übermäßig großen Drehzahlunterschied (Δn > Δnₛₒₗₗ) zwischen den Wellenabschnitten (17, 19) die Schiebemuffe (38) fehlerhaft bis in ihre Schließposition verstellt ist, während die Verschiebeklaue (37) bis in Anlage Zahn (51) auf Zahn (51) mit der Festklaue (36) gebracht ist, wodurch sich eine axiale Dynamik aufbaut, in der die Verschiebeklaue (37) an Abweiskonturen (55) der Festklaue (36) abprallt und in der Rückfederbewegung (R) axial in Gegen-Schließrichtung verstellbar ist sowie anschließend wieder in Schließrichtung in die Anlage Zahn (51) auf Zahn (51) zurückfedert, und zwar unter Ausübung eines Stoßes (S) auf die Festklaue (36).

3. Kupplungsanordnung nach einem der vorhergehenden Ansprüche, **dadurch gekennzeichnet, dass** sich die Verschiebeklaue (37) ringförmig um den Außenumfang des ersten Wellenabschnitts (19) erstreckt, und/oder die Verschiebeklaue (37) mit ihrer von den Klauen (33, 35) abgewandten Stirnseite (43) in Anschlag mit dem Dämpfungselement (45) bringbar ist.

4. Kupplungsanordnung nach einem der vorhergehenden Ansprüche, **dadurch gekennzeichnet, dass** sich das Dämpfungselement (45) ringförmig um den Außenumfang des ersten Wellenabschnittes (19) erstreckt.

5. Kupplungsanordnung nach einem der vorhergehenden Ansprüche, **dadurch gekennzeichnet, dass** das Dämpfungselement (45) beziehungsweise der Dämpfungskörper (47) ein biegeschlaffes Hohlprofilelement (59) aufweist, dessen Hohlkammer mit Dämpfungsmaterial (61), etwa Dämpfungsgel oder Dämpfungspartikel, gefüllt ist.

## Claims

1. Clutch assembly having two shaft portions (17, 19), which can be coupled by means of a dog clutch (21), which has a sliding dog (37), which is arranged so as to be rotationally fixed but axially displaceable on one of the shaft portions (19), wherein, in a certain operating state, specifically in a fault case, the sliding dog (37) can be adjusted counter to the closing direction in a restoring movement (R), wherein
a damping element (45), against which the sliding dog (37) strikes during the restoring movement (R), is provided in order to reduce kinetic energy, specifically shock energy,
**characterized in that** the damping element (45) consists of a plastically deformable damping body (47), which is connected to a carrier element (49), which is fastened to the first shaft portion (19), and **in that** the shock energy of the sliding dog (37) can be reduced as the damping element (45) is plastically deformed, with the result that, in the fault case, the dog clutch (21) is prevented from unintentionally closing on account of excessive shock energy of the sliding dog (37).

2. Clutch assembly according to Claim 1, **characterized in that** the dog clutch (21) has a fixed dog (36), which is arranged so as to be rotationally fixed and axially fixed in position on the other shaft portion (17), and **in that** the sliding dog (37) can be adjusted into the closed position or into an open position by means of an actuator-operated sliding sleeve (38), and **in that** an overload spring (41) is supported between the actuator-operated sliding sleeve (38) and the sliding dog (37), so that in a regular closing operation, the actuator-operated sliding sleeve (38), through the intermediary of the overload spring (41), first of all can bring the sliding dog (37) in the axial direction into tooth (51) to tooth (51) contact with the fixed dog (36), and, once the tooth (51) to tooth (51) contact has been achieved, the sliding sleeve (38) can be further adjusted into its closed position, specifically by building up an overload spring force (F_{F}) of the overload spring (41) that acts axially on the dogs (36, 37), and **in that**, as soon as tooth (51) to gap (53) contact has been established in the case of a small speed difference (Δn ≤ Δnₛₒₗₗ), the two dogs (36, 37) enter into positively locking connection, with the overload spring force (F_{F}) of the overload spring (41) being reduced, and so that in the fault case, in the case of an excessively large speed difference (Δn > Δnₛₒₗₗ) between the shaft portions (17, 19), the sliding sleeve (38) is incorrectly adjusted into its closed position, while the sliding dog (37) is brought into tooth (51) to tooth (51) contact with the fixed dog (36), which results in the creation of axial dynamics, in which the sliding dog (37) rebounds off deflection contours (55) of the fixed dog (36) and can be axially adjusted in a counter-closing direction in the restoring movement (R) and then springs back again in the closing direction into the tooth (51) to tooth (51) contact, specifically with a shock (S) being applied to the fixed dog (36).

3. Clutch assembly according to one of the preceding claims, **characterized in that** the sliding dog (37) extends annularly around the outer circumference of the first shaft portion (19), and/or the sliding dog (37), by way of its end face (43) facing away from the dogs (33, 35), can be brought into abutment with the damping element (45).

4. Clutch assembly according to one of the preceding claims, **characterized in that** the damping element (45) extends annularly around the outer circumference of the first shaft portion (19).

5. Clutch assembly according to one of the preceding claims, **characterized in that** the damping element (45) or the damping body (47) has a flexible hollow profile element (59), the hollow chamber of which is filled with damping material (61), for instance damping gel or damping particles.

## Revendications

1. Ensemble d'embrayage avec deux sections d'arbre (17, 19), qui peuvent être couplées au moyen d'un embrayage à griffes (21) qui comporte une griffe de glissement (37) qui est disposée de manière solidaire en rotation, de manière toutefois à pouvoir être coulissée axialement, sur une des sections d'arbre (19), la griffe de coulissement (37) pouvant être déplacée dans le sens opposé à la direction de fermeture en un mouvement de ressort de rappel (R) dans un état de fonctionnement donné, à savoir en cas d'erreur, pour réduire l'énergie de mouvement,
à savoir l'énergie d'impact, un élément d'amortissement (45) est fourni, contre lequel la griffe de coulissement (37) vient buter dans le mouvement de ressort de rappel (R),
**caractérisé en ce que** l'élément d'amortissement (45) est constitué d'un corps d'amortissement (47) plastiquement déformable, qui est attaché sur un élément de support (49), qui est fixé sur la première section d'arbre (19), et que l'énergie d'impact de la griffe de coulissement (37) peut être réduite en déformant plastiquement l'élément d'amortissement (45) de telle sorte qu'en cas d'erreur, une fermeture involontaire de l'embrayage à griffes (21) est empêchée en raison de l'énergie d'impact importante de la griffe de coulissement (37).

2. Ensemble d'embrayage selon la revendication 1, **caractérisé en ce que** l'embrayage à griffes (21) comporte une griffe fixe (36), qui est disposée de manière solidaire en rotation et de manière axialement stationnaire sur l'autre section d'arbre (17), et que la griffe de coulissement (37) peut être déplacée dans la position de fermeture ou dans une position ouverte au moyen d'un manchon coulissant (38) actionné par un actionneur, et qu'un ressort de surcharge (41) est soutenu entre le manchon coulissant (38) actionné par un actionneur et la griffe de coulissement (37), de telle sorte que
dans une opération de fermeture régulière, le manchon coulissant (38) actionné par un actionneur peut amener la griffe de coulissement (37) d'abord en appui dent (51) sur dent (51) avec la griffe fixe (36) dans la direction axiale en intercalant le ressort de surcharge (41), et que, une fois l'appui dent (51) sur dent (51) atteint, le manchon coulissant (38) peut être déplacé par la suite jusque dans sa position de fermeture, à savoir en élaborant une force (F_{F}) de ressort de surcharge du ressort de surcharge (41) agissant axialement sur les griffes (36, 37), et que, dès qu'un appui dent (51) sur interstice (53) est réalisé en présence d'une faible différence de vitesse de rotation (Δn ≤ Δn_{théorique}), les deux griffes (36, 37) parviennent en liaison par complémentarité de forme en réduisant la force (F_{F}) de ressort de surcharge du ressort de surcharge (41), et de telle sorte que
en cas d'erreur, en présence d'une différence de vitesse de rotation proportionnellement importante (Δn > Δn_{théorique}) entre les sections d'arbre (17, 19), le manchon coulissant (38) est déplacé de manière erronée jusque dans sa position de fermeture, tandis que la griffe de coulissement (37) est amenée en appui dent (51) sur dent (51) avec la griffe fixe (36), ce qui permet d'élaborer une dynamique axiale, dans laquelle la griffe de coulissement (37) rebondit sur des contours de rejet (55) de la griffe fixe (36) et peut être déplacée axialement à l'opposé de la direction de fermeture dans le mouvement de ressort de rappel (R) puis revient en appui dent (51) sur dent (51) dans la direction de fermeture, à savoir en exerçant un impact (S) sur la griffe fixe (36).

3. Ensemble d'embrayage selon l'une des revendications précédentes, **caractérisé en ce que** la griffe de coulissement (37) s'étend de manière annulaire autour de la périphérie extérieure de la première section d'arbre (19), et/ou la griffe de coulissement (37) peut être amenée en butée avec l'élément d'amortissement (45) par son côté frontal (43) opposé aux griffes (33, 35).

4. Ensemble d'embrayage selon l'une des revendications précédentes, **caractérisé en ce que** l'élément d'amortissement (45) s'étend de manière annulaire autour de la périphérie extérieure de la première section d'arbre (19).

5. Ensemble d'embrayage selon l'une des revendications précédentes, **caractérisé en ce que** l'élément d'amortissement (45) ou le corps d'amortissement (47) comporte un élément profilé creux (59) souple en flexion, dont la chambre creuse est remplie de matériau d'amortissement (61), par exemple de gel d'amortissement ou de particules d'amortissement.
